# EUROPÄISCHE PATENTSCHRIFT

(11) **EP 1 061 084 B1**
(45) Veröffentlichungstag und Bekanntmachung des Hinweises auf die Patenterteilung: **17.03.2004**
(21) Anmeldenummer: 00110326.6
(22) Anmeldetag: 13.05.2000
(51) Int. Cl.: C07F 9/38

(54) **Verfahren zur Herstellung von Alkylphosphonsäuren**
Process for the preparation of alkylphosphonic acids
Procédé pour la préparation d'acides alkylphosphoniques

(30) Priorität: 18.06.1999 DE 19927787
(43) Veröffentlichungstag der Anmeldung: 20.12.2000
(73) Patentinhaber: Clariant GmbH, 65929 Frankfurt am Main (DE)
(72) Erfinder: Weferling, Norbert, Dr., 50354 Hürth (DE); Sicken, Martin, Dr., 51149 Köln (DE); Schmitz, Hans-Peter, 50321 Brühl (DE)

(56) Entgegenhaltungen:
- DE-A- 2 043 520
- FR-A- 2 085 443
- GRIFFIN C.E.: "Phosphonic acids and esters. I. Radical initiated addition of phosphorous acid to olefins" JOURNAL OF ORGANIC CHEMISTRY., Bd. 24, Nr. 12, 1959, Seiten 2049-2051, XP002147408 AMERICAN CHEMICAL SOCIETY. EASTON., US ISSN: 0022-3263
- DATABASE WPI Section Ch, Week 9247 Derwent Publications Ltd., London, GB; Class A60, AN 385442 XP002147409 & JP 04 283594 A (MIYOSHI YUSHI KK), 8. Oktober 1992 (1992-10-08)

## Beschreibung

Die vorliegende Erfindung betrifft ein Verfahren zur Herstellung von Alkylphosphonsäuren sowie die Verwendung der nach diesem Verfahren hergestellten Produkte.

Alkylphosphonsäuren sind von großer technischer Bedeutung und werden in großem Umfang selbst oder in Form ihrer Salze, Ester und Anhydride in verschiedensten Anwendungsgebieten eingesetzt. Beispiele für Anwendungen der Alkylphosphonsäuren sind Wasserenthärtung, ErzFlotation, Schwermetall-Komplexierung sowie deren Einsatz als Ausgangsprodukte für die Herstellung von unter anderem Flammschutzmitteln, Pharmaka und Pestiziden.

Die Herstellung dieser Verbindungen erfolgt zumeist durch aufwendige mehrstufige Synthesen, beispielsweise indem zunächst aus Phosphortrichlorid durch Umsetzung mit Alkoholen Dialkylphosphite hergestellt werden, diese anschließend an Olefine oder Carbonylverbindungen addiert werden und die dabei entstehenden Phosphonsäurediester durch Hydrolyse unter Abspaltung der zuvor eingesetzten Alkohole in die Phosphonsäuren überführt werden.

Diese Methode bedingt einen erheblichen Verbrauch der als Hilfsstoffe eingesetzten Alkohole, da bei der Umsetzung mit Phosphortrichlorid unerwünschte Alkylchloride gebildet werden und auch beim Alkohol-Recycling Verluste auftreten. Dies sowie die Mehrstufigkeit des Verfahrens hat zur Folge, daß die so hergestellten Produkte nur aufwendig und unwirtschaftlich herstellbar sind und deshalb für viele mögliche Anwendungen nicht eingesetzt werden können.

Auch die zweite technisch bedeutende Herstellmethode, bei der die Michaelis-Arbusov-Reaktion Anwendung findet, ist technisch aufwendig, geht von teuren Edukten aus (Ester der Phosphorigen Säure), bedingt einen Zwangsanfall von Alkylhalogeniden und erfordert eine abschließende Hydrolyse.

Die direkte Herstellung von Phosphonsäuren aus Phosphoriger Säure ist bislang auf die Umsetzung mit Formaldehyd/Ammoniak zu Aminomethylphosphonsäuren und auf die Umsetzung mit Carbonylverbindungen zu Hydroxymethylphosphonsäuren beschränkt.

Versuche zur Umsetzung von phosphoriger Säure mit längerkettigen Olefinen führten zu geringen Ausbeuten und erheblichen Nebenreaktionen [C. E. Griffin, H. J. Wells, J. Org. Chem. 24 (1959) 2049].

Die FR-A-2 085 443 beschreibt ein Verfahren zur Herstellung von organischen Phosphinsäuren, bei dem unter Ausschluß von Sauerstoff unter photochemischer Initiierung längerkettige Olefine mit einem hohem Überschuß an phosphoriger Säure umgesetzt wird. Zum Erhalt der Produkte ist eine aufwendige Abtrennung notwendig.

Nach der JP-A-04 283594 werden Alkylphosphinsäuren mit Kettenlängen von 6 bis 30 C-Atomen erhalten, indem das entsprechende Alken in einem Lösungsmittel (Ketone oder Gemische von Ketonen mit halogenierten Lösungsmitteln) mit Phosphoriger Säure umgesetzt werden.

Ein Verfahren zur Herstellung von Alkanphosphonsäurediestern ausgehend von Dialkylphosphiten wird in der DE-A-2 043 520 beschrieben.

Es besteht daher ein Bedarf an Verfahren zur Herstellung von Phosphonsäuren, welches auf einfache Art und Weise durchführbar ist und bei dem einheitliche Produkte in hoher Ausbeute erhalten werden. Auch sollte ein solches Verfahren den bisher bekannten ökonomisch und umwelttechnisch deutlich überlegen sein.

Der Erfindung liegt somit die Aufgabe zugrunde, ein Verfahren zur Herstellung von Phosphonsäuren zur Verfügung zu stellen, das die vorgenannten Nachteile vermeidet und in einer Stufe, ausgehend von einfachen, zur Verfügung stehenden Edukten, durchgeführt werden kann.

Diese Aufgabe wird gelöst durch ein Verfahren der eingangs genannten Art, dadurch gekennzeichnet, daß man Phosphorige Säure (H₃PO₃) mit kurzkettigen Olefinen umsetzt.

Unter den Reaktionsbedingungen sind die kurzkettigen Olefine gasförmig.

Das erfindungsgemäße Verfahren, welches zu den entsprechenden Alkylphosphonsäuren führt, weist gegenüber den bisher bekannten Verfahren erhebliche Vorteile auf, da es einstufig verläuft, auf den Einsatz von Alkoholen verzichtet und keine halogenierten organischen Nebenprodukte erzeugt werden. Es handelt sich um eine sogenannte direkte Umsetzung ohne daß irgendwelche Zwischenschritte notwendig sind.

Bevorzugt setzt man die Phosphorige Säure in Gegenwart eines Radikalstarters mit Olefinen um.

Bevorzugt werden als Radikalstarter Azo-Verbindungen eingesetzt.

Bevorzugt handelt es sich bei den Azo-Verbindungen um kationische und/oder nicht-kationische Azo-Verbindungen.

Bevorzugt werden als kationische Azo-Verbindungen 2,2'-Azobis(2-amidinopropan)-dihydrochlorid oder 2,2'-Azobis(N,N'-dimethylenisobutyramidin)dihydrochlorid eingesetzt.

Bevorzugt werden als nicht-kationische Azo-Verbindungen Azobis(isobutyronitril), 4,4'Azobis(4-cyano-pentansäure), 2,2'Azobis(2-methylbutyronitril) eingesetzt.

Bevorzugt werden als Radikalstarter auch peroxidische anorganische und/oder peroxidische organische Radikalstarter eingesetzt.

Bevorzugt werden als peroxidische anorganische Radikalstarter Wasserstoffperoxid, Ammoniumperoxodisulfat und/oder Kaliumoperoxodisulfat eingesetzt.

Bevorzugt werden als peroxidische organische Radikalstarter Dibenzoylperoxid, Di-tert.butylperoxid und/oder Peressigsäure eingesetzt.

Eine breite Auswahl geeigneter Radikalstarter findet sich beispielsweise in Houben-Weyl, Ergänzungsband 20, im Kapitel "Polymerisation durch radikalische Initiierung" auf den Seiten 15-74.

Bevorzugt werden die Radikalstarter während der Reaktion kontinuierlich zudosiert.

Bevorzugt werden die Radikalstarter während der Reaktion in Form einer Lösung im eingesetzten Lösungsmittel kontinuierlich zudosiert.

Bevorzugt werden als Olefine Ethylen, Propylen, 1-Buten, 2-Buten, 2-Methyl-1-propen, 1-Penten, 2-Penten und/oder 2-Methyl-1-buten eingesetzt.

Bevorzugt erfolgt die Umsetzung bei einer Temperatur von 40 bis 200 °C.

Besonders bevorzugt erfolgt die Umsetzung einer Temperatur von 70 bis 130 °C.

Bevorzugt erfolgt die Umsetzung ohne Lösungsmittel in der Schmelze der Phosphorigen Säure.

Bevorzugt erfolgt die Umsetzung aber auch in Gegenwart eines Lösungsmittels

Bevorzugt handelt es sich bei dem Lösungsmittel um Essigsäure oder Essigsäureethylester.

Bevorzugt erfolgt die Umsetzung unter Druck des eingesetzten Olefins.

Bevorzugt erfolgt die Umsetzung unter einem Druck des eingesetzten Olefins von 1 bis 20 bar.

Bevorzugt wird während oder nach der Umsetzung Wasser zugefügt.

Der Gegenstand der vorliegenden Erfindung umfaßt insbesondere auch ein Verfahren, bei dem man Phosphorige Säure mit Ethylen in Gegenwart eines Radikalstarters auf Basis von Azoverbindungen oder in Gegenwart eines peroxidischen Radikalstarters zur Ethylphosphonsäure als Hauptprodukt umsetzt.

Der Gegenstand der vorliegenden Erfindung umfaßt insbesondere auch ein Verfahren, bei dem man Phosphorige Säure mit Propylen in Gegenwart eines Radikalstarters auf basis von Azoverbindungen oder in Gegenwart eines peroxidischen Radikalstarters zur Propylphosphonsäure als Hauptprodukt umsetzt.

Die Erfindung betrifft auch die Verwendung der erfindungsgemäß hergestellten Alkylphosphonsäuren zur Herstellung von phosphororganischen Verbindungen und Derivaten.

Die Erfindung betrifft auch die Verwendung der erfindungsgemäß hergestellten Alkylphosphonsäuren als Vorprodukte zur chemischen Synthese.

Die Erfindung betrifft auch die Verwendung der erfindungsgemäß hergestellten Alkylphosphonsäuren als Flammschutzmittel oder zur Herstellung von Flammschutzmitteln.

Die Erfindung betrifft auch die Verwendung der erfindungsgemäß hergestellten Alkylphosphonsäuren als Flammschutzmittel in thermoplastischen Polymeren wie Polyethylenterephthalat, Polybutylenterephthalat oder Polyamid.

Die Erfindung betrifft auch die Verwendung der erfindungsgemäß hergestellten Alkylphosphonsäuren als Flammschutzmittel in duroplastischen Harzen wie ungesättigte Polyesterharze, Epoxidharze, Polyurethane oder Acrylate.

Die gewünschten Phosphonsäuren werden mit hoher Selektivität in äußerst hohen Ausbeuten erhalten. Dies wird nach dem erfindungsgemäßen Verfahren dadurch erreicht, daß durch die kontinuierliche Dosierung des Radikalstarters in die Reaktionsmischung eine konstante Konzentration der reaktionsfähigen Phosphorigsäure-Radikale erzeugt wird. Diese reagieren mit den kurzkettigen Olefinen nahezu ohne Nebenreaktionen zu den Phosphonsäuren ab, da die Olefin-Konzentration in der flüssigen Phase aufgrund deren schlechter Löslichkeit in Phosphoriger Säure bzw. den verwendeten Lösungsmitteln gering ist. Nebenreaktionen, bei denen Olefine mit sich selbst reagieren, beispielsweise über Allyl-Radikale sind somit stark unterdrückt. Andererseits ist die Reaktion bei Verwendung kurzkettiger Olefine hinreichend schnell, da diese hohe Diffusionsgeschwindigkeiten von der Gasphase in die Flüssigphase aufweisen

Als Reaktions-Nebenprodukte können, je nach Bedingungen, geringe Mengen Homologisierungsprodukte auftreten, wie zum Beispiel Hexylphosphonsäure aus einer zweifachen Anlagerung von Propylen an Phosphorige Säure.

Als weitere Nebenprodukte können, vor allem bei Anwendung höherer Reaktionstemperaturen Phosphonsäureanhydride sowie durch Olefin-Einschub in die P-O-H-Gruppierung Phosphonsäureester gebildet werden. Letztere Nebenprodukte können durch Zusatz kleiner Wassermengen gegen Ende der Reaktion in die gewünschten Phosphonsäuren überführt werden.

Unumgesetzte Phosphorige Säure kann durch gängige Methoden, wie Umkristallisation vom Reaktionsprodukt abgetrennt werden.

Die Erfindung wird durch die nachstehenden Beispiele erläutert:

### Beispiel 1: Propylphosphonsäure

6 kg (73 Mol) Phosphorige Säure wurden in einem 16-L-Doppelmantel-Druckreaktor aus Stahl-Emaille vorgelegt. Nach Aufschmelzen der Phosphorigen Säure und Aufheizen derselben auf 100 °C wurde über ein auf 4 bar eingestelltes Reduzierventil Propylen bis zur Sättigung in den Reaktor eingeleitet. Unter ständigem Rühren und ständiger Propylenzufuhr wurde eine Lösung von 164 g (1 Mol) 2,2'-Azobis(isobutyronitril) in 3 l Eisessig über einen Zeitraum von 24 h bei einer Temperatur von 100 bis 110 °C zudosiert. Danach ließ man noch 1 h bei 100 °C nachreagieren. Der Reaktor wurde entspannt, auf Raumtemperatur abgekühlt und der Inhalt analysiert.

| | | | |
|---|---|---|---|
| ³¹P-NMR-Analyse | Propylphosphonsäure | 35.4 ppm | 80.2Mol% |
| | Hexylphosphonsäure | 35.0 ppm | 4.2 Mol% |
| | Propylphosphonsäureanhydrid | 25.3 ppm | 2.7 Mol% |
| | Propylphosphonsäureisopropylester | 38.8 ppm | 4.0 Mol% |
| | Phosphorige Säure | 7.1 ppm | 7.9 Mol% |
| | unbekannte Komponenten | | 1.0 Mol% |

Nach Zugabe von 100 ml Wasser wurde das Reaktionsgemisch aufgekocht und am Rotationsverdampfer von den enthaltenen Lösungsmitteln und Katalysatorzerfallsprodukten befreit. Man erhielt so 8,95 kg Propylphosphonsäure in Form eines weißen Feststoffes mit einem Schmelzbereich von 35 bis 45 °C. Der Phosphonsäure-Gehalt beträgt> 91 %.

### Beispiel 2: Ethylphosphonsäure

6 kg (73 Mol) Phosphorige Säure wurden in einem 16-L-Doppelmantel-Druckreaktor aus Stahl-Emaille vorgelegt. Nach Aufschmelzen der Phosphorigen Säure und Aufheizen derselben auf 100 °C wurde über ein auf 6 bar eingestelltes Reduzierventil Ethylen bis zur Sättigung in den Reaktor eingeleitet. Unter ständigem Rühren und ständiger Ethylenzufuhr wurde eine Lösung von 82 g (0.5 Mol) 2,2'-Azobis(isobutyronitril) (AIBN) in 600 mL Essigsäureethylester über einen Zeitraum von 8 h bei einer Temperatur von 100 bis 110 °C zudosiert. Anschließend wurde der Ethylendruck auf 10 bar erhöht und es wurde eine Lösung von weiteren 41 g (0.25 Mol) AIBN in 300 ml Eisessig über einen Zeitraum von 4 h bei gleicher Temperatur zudosiert. Danach wurden 100 ml Wasser zudosiert und man ließ noch 1 h bei 100 °C nachreagieren. Der Reaktor wurde entspannt, auf Raumtemperatur abgekühlt und der Inhalt analysiert.

| | | | |
|---|---|---|---|
| ³¹P-NMR-Analyse | Ethylphosphonsäure | 37.1 ppm | 92.2 Mol% |
| | Butylphosphonsäure | 35.7 ppm | 6.9 Mol% |
| | Phosphorige Säure | 6.9 ppm | 0.7 Mol% |
| | unbekannte Komponenten | | 0.2 Mol% |

Das Reaktionsgemisch wurde am am Rotationsverdampfer von den enthaltenen Lösungsmitteln und Initiatorresten befreit. Man erhielt so 82 kg Ethylphosphonsäure (99 % Ausbeute; Reinheit ca. ca 90 %; Rest Butylphosphonsäure, Ethylphosphonsäureanhydrid) in Form eines wei ßen Feststoffes. Die Phosphoranalyse ergab 27.3 % P (theor.: 27,7 %).

## Patentansprüche

1. Verfahren zur Herstellung von Alkylphosphonsäuren, **dadurch gekennzeichnet, daß** man Phosphorige Säure mit C₂ bis C₅ - Olefinen umsetzt.

2. Verfahren nach Anspruch 1, **dadurch gekennzeichnet, daß** man in Gegenwart eines Radikalstarters umsetzt.

3. Verfahren nach Anspruch 1 oder 2, **dadurch gekennzeichnet, daß** als Radikalstarter Azo-Verbindungen eingesetzt werden.

4. Verfahren nach Anspruch 3, **dadurch gekennzeichnet, daß** es sich bei den Azo-Verbindungen um kationische und/oder nicht-kationische Azo-Verbindungen handelt.

5. Verfahren nach Anspruch 3 oder 4, **dadurch gekennzeichnet, daß** als kationische Azo-Verbindungen 2,2'-Azobis(2-amidinopropan)dihydrochlorid oder 2,2'-Azobis(N,N'dimethylenisobutyramidin)dihydrochlorid eingesetzt werden.

6. Verfahren nach Anspruch 3 oder 4, **dadurch gekennzeichnet, daß** als nicht-kationische Azo-Verbindungen Azobis(isobutyronitril), 4,4'Azobis(4-cyano-pentansäure) oder 2,2'Azobis(2-methylbutyronitril) eingesetzt werden.

7. Verfahren nach Anspruch 1 oder 2, **dadurch gekennzeichnet, daß** als Radikalstarter peroxidische anorganische und/oder peroxidische organische Radikalstarter eingesetzt werden.

8. Verfahren nach Anspruch 7, **dadurch gekennzeichnet, daß** als peroxidische anorganische Radikalstarter Wasserstoffperoxid, Ammoniumperoxodisulfat und/oder Kaliumperoxodisulfat eingesetzt werden.

9. Verfahren nach Anspruch 7 **dadurch gekennzeichnet, daß** daß als peroxidische organische Radikalstarter Dibenzoylperoxid, Di-tert.-butylperoxid und/oder Peressigsäure eingesetzt werden.

10. Verfahren nach einem oder mehreren der Ansprüche 1 bis 9, **dadurch gekennzeichnet, daß** die Radikalstarter während der Reaktion kontinuierlich zudosiert werden.

11. Verfahren nach einem oder mehreren der Ansprüche 1 bis 10, **dadurch gekennzeichnet, daß** die Radikalstarter während der Reaktion in Form einer Lösung im eingesetzten Lösungsmittel kontinuierlich zudosiert werden.

12. Verfahren nach einem oder mehreren der Ansprüche 1 bis 11, **dadurch gekennzeichnet, daß** als Olefine Ethylen, Propylen, 1-Buten, 2-Buten, 2-Methyl-1-propen, 1-Penten, 2-Penten und/oder 2-Methyl-1-buten eingesetzt werden.

13. Verfahren nach einem oder mehreren der Ansprüche 1 bis 12, **dadurch gekennzeichnet, daß** man bei einer Temperatur von 40 bis 200 °C umsetzt.

14. Verfahren nach einem oder mehreren der Ansprüche 1 bis 13, **dadurch gekennzeichnet, daß** man bei einer Temperatur von 70 bis 130 °C umsetzt.

15. Verfahren nach einem oder mehreren der Ansprüche 1 bis 14, **dadurch gekennzeichnet, daß** man ohne Lösungsmittel in der Schmelze der Phosphorigen Säure umsetzt.

16. Verfahren nach einem oder mehreren der Ansprüche 1 bis 15, **dadurch gekennzeichnet, daß** man in Gegenwart eines Lösungsmittels umsetzt.

17. Verfahren nach Anspruch 16, **dadurch gekennzeichnet, daß** es sich bei dem Lösungsmittel um Essigsäure oder Essigsäureethylester handelt.

18. Verfahren nach einem oder mehreren der Ansprüche 1 bis 17, **dadurch gekennzeichnet, daß** man unter Druck des eingesetzten Olefins umsetzt.

19. Verfahren nach Anspruch 18, **dadurch gekennzeichnet, daß** man unter einem Druck des eingesetzten Olefins von 1 bis 20 bar umsetzt.

20. Verfahren nach einem oder mehreren der Ansprüche 1 bis 19, **dadurch gekennzeichnet, daß** man während oder nach der Reaktion Wasser zusetzt.

21. Verfahren nach einem oder mehreren der Ansprüche 1 bis 20, **dadurch gekennzeichnet, daß** man Phosphorige Säure mit Ethylen in Gegenwart eines Radikalstarters auf Basis von Azoverbindungen oder in Gegenwart eines peroxidischen Radikalstarters zur Ethylphosphonsäure als Hauptprodukt umsetzt.

22. Verfahren nach einem oder mehreren der Ansprüche 1 bis 20, **dadurch gekennzeichnet, daß** man Phosphorige Säure mit Propylen in Gegenwart eines Radikalstarters auf Basis von Azoverbindungen oder in Gegenwart eines peroxidischen Radikalstarters zur Propylphosphonsäure als Hauptprodukt umsetzt.

## Claims

1. A process for the preparation of alkylphosphonic acids, which comprises reacting phosphorous acid with C₂-C₅-olefins.

2. A process as claimed in claim 1, wherein the reaction is carried out in the presence of a free-radical initiator.

3. A process as claimed in claim 1 or 2, wherein the free-radical initiators employed are azo compounds.

4. A process as claimed in claim 3, wherein the azo compounds are cationic and/or non-cationic azo compounds.

5. A process as claimed in claim 3 or 4, wherein the cationic azo compounds employed are 2,2'-azobis(2-amidinopropane) dihydrochloride or 2,2'-azobis(N,N'-dimethyleneisobutyramidine) dihydrochloride.

6. A process as claimed in claim 3 or 4, wherein the non-cationic azo compounds employed are azobis(isobutyronitrile), 4,4'-azobis(4-cyanopentanoic acid) or 2,2'-azobis(2-methylbutyronitrile).

7. A process as claimed in claim 1 or 2, wherein the free-radical initiators employed are peroxidic inorganic and/or peroxidic organic free-radical initiators.

8. A process as claimed in claim 7, wherein the peroxidic inorganic free-radical initiators employed are hydrogen peroxide, ammonium peroxodisulfate and/or potassium peroxodisulfate.

9. A process as claimed in claim 7, wherein the peroxidic organic free-radical initiators employed are dibenzoyl peroxide, di-tert-butyl peroxide and/or peracetic acid.

10. A process as claimed in one or more of claims 1 to 9, wherein the free-radical initiators are metered in continuously during the reaction.

11. A process as claimed in one or more of claims 1 to 10, wherein the free-radical initiators are metered in continuously during the reaction in the form of a solution in the solvent employed.

12. A process as claimed in one or more of claims 1 to 11, wherein the olefins employed are ethylene, propylene, 1-butene, 2-butene, 2-methyl-1-propene, 1-pentene, 2-pentene and/or 2-methyl-1-butene.

13. A process as claimed in one or more of claims 1 to 12, wherein the reaction is carried out at a temperature of from 40 to 200°C.

14. A process as claimed in one or more of claims 1 to 13, wherein the reaction is carried out at a temperature of from 70 to 130°C.

15. A process as claimed in one or more of claims 1 to 14, wherein the reaction is carried out without solvents in the melt of the phosphorous acid.

16. A process as claimed in one or more of claims 1 to 15, wherein the reaction is carried out in the presence of a solvent.

17. A process as claimed in claim 16, wherein the solvent is acetic acid or ethyl acetate.

18. A process as claimed in one or more of claims 1 to 17, wherein the reaction is carried out under the pressure of the olefin employed.

19. A process as claimed in claim 18, wherein the reaction is carried out under a pressure of the olefin employed of from 1 to 20 bar.

20. A process as claimed in one or more of claims 1 to 19, wherein water is added during or after the reaction.

21. A process as claimed in one or more of claims 1 to 20, wherein phosphorous acid is reacted with ethylene in the presence of a free-radical initiator based on azo compounds or in the presence of a peroxidic free-radical initiator to give ethylphosphonic acid as the principal product.

22. A process as claimed in one or more of claims 1 to 20, wherein phosphorous acid is reacted with propylene in the presence of a free-radical initiator based on azo compounds or in the presence of a peroxidic free-radical initiator to give propylphosphonic acid as the principal product.

## Revendications

1. Procédé de préparation d'acides alkylphosphoniques, **caractérisé en ce que** l'on fait réagir de l'acide phosphoreux avec des oléfines en C₂-C₅.

2. Procédé selon la revendication 1, **caractérisé en ce que** l'on effectue la réaction en présence d'un amorceur de radicaux.

3. Procédé selon la revendication 1 ou 2, **caractérisé en ce que** l'on utilise des composés azoïques comme amorceurs de radicaux.

4. Procédé selon la revendication 3, **caractérisé en ce que** les composés azoïques sont des composés azoïques cationiques et/ou non cationiques.

5. Procédé selon la revendication 3 ou 4, **caractérisé en ce que** l'on utilise comme composés azoïques cationiques le dichlorhydrate de 2,2'-azobis(2-amidinopropane ou le dichlorhydrate de 2,2'-azobis(N,N'-diméthylène-isobutyramidine).

6. Procédé selon la revendication 3 ou 4, **caractérisé en ce que** l'on utilise comme composés azoïques non cationiques l'azobis(isobutyronitrile), l'acide 4,4'-azobis(4-cyanopentanoïque) ou le 2,2'-azobis(2-méthylbutyronitrile).

7. Procédé selon la revendication 1 ou 2, **caractérisé en ce que** l'on utilise comme amorceurs de radicaux des amorceurs de radicaux peroxydiques inorganiques et/ou peroxydiques organiques.

8. Procédé selon la revendication 7, **caractérisé en ce que** l'on utilise comme amorceur de radicaux peroxydique inorganique le peroxyde d'hydrogène, le peroxodisulfate d'ammonium et/ou le peroxodisulfate de potassium.

9. Procédé selon la revendication 7, **caractérisé en ce que** l'on utilise comme amorceur de radicaux peroxydique organique le peroxyde de dibenzoyle, le peroxyde de di-tert-butyle et/ou l'acide peracétique.

10. Procédé selon l'une ou plusieurs des revendications 1 à 9, **caractérisé en ce que** l'on ajoute les amorceurs de radicaux de façon dosée en continu pendant la réaction.

11. Procédé selon l'une ou plusieurs des revendications 1 à 10, **caractérisé en ce que** l'on ajoute les amorceurs de radicaux de façon dosée en continu pendant la réaction, sous forme d'une solution dans le solvant utilisé.

12. Procédé selon l'une ou plusieurs des revendications 1 à 11, **caractérisé en ce que** l'on utilise comme oléfines de l'éthylène, du propylène, du 1-butène, du 2-butène, du 2-méthyl-1-propène, du 1-pentène, du 2-pentène et/ou du 2-méthyl-1-butène.

13. Procédé selon l'une ou plusieurs des revendications 1 à 12, **caractérisé en ce que** l'on effectue la réaction à une température de 40 à 200°C.

14. Procédé selon l'une ou plusieurs des revendications 1 à 13, **caractérisé en ce que** l'on effectue la réaction à une température de 70 à 130°C.

15. Procédé selon l'une ou plusieurs des revendications 1 à 14, **caractérisé en ce que** l'on effectue la réaction sans solvant dans l'acide phosphoreux fondu.

16. Procédé selon l'une ou plusieurs des revendications 1 à 15, **caractérisé en ce que** l'on effectue la réaction en présence d'un solvant.

17. Procédé selon la revendication 16, **caractérisé en ce que** le solvant est l'acide acétique ou l'acétate d'éthyle.

18. Procédé selon l'une ou plusieurs des revendications 1 à 17, **caractérisé en ce que** l'on effectue la réaction sous pression de l'oléfine utilisée.

19. Procédé selon la revendication 18, **caractérisé en ce que** l'on effectue la réaction sous une pression de l'oléfine utilisée de 1 20 bars.

20. Procédé selon l'une ou plusieurs des revendications 1 à 19, **caractérisé en ce que** l'on ajoute de l'eau pendant ou après la réaction.

21. Procédé selon l'une ou plusieurs des revendications 1 à 20, **caractérisé en ce que** l'on fait réagir de l'acide phosphoreux avec de l'éthylène en présence d'un amorceur de radicaux à base de composés azoïques ou en présence d'un amorceur de radicaux peroxydique pour obtenir de l'acide éthylphosphonique comme produit principal.

22. Procédé selon l'une ou plusieurs des revendications 1 à 20, **caractérisé en ce que** l'on fait réagir de l'acide phosphoreux avec du propylène en présence d'un amorceur de radicaux à base de composés azoïques ou en présence d'un amorceur de radicaux peroxydique pour obtenir de l'acide propylphosphonique comme produit principal.
